# EUROPEAN PATENT APPLICATION

(11) **EP 4 786 253 A1**
(43) Date of publication of application: **05.08.2026**
(21) Application number: 24909556.3
(22) Date of filing: 04.06.2024
(51) Int. Cl.: B60L 50/60, B60L 53/80, B60L 58/18

(54) **VEHICLE POWER SUPPLY SYSTEM AND VEHICLE**

(30) Priority: 26.12.2023 CN 202323594398 U
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: ZHANG, Jiantao, Ningde, Fujian 352100 (CN); LIN, Benfeng, Ningde, Fujian 352100 (CN); YANG, Longjie, Ningde, Fujian 352100 (CN)
(74) Representative: Kraus & Lederer PartGmbB
(86) International application number: PCT/CN2024/097319
(87) International publication number: WO 2025/138594

(57) **Abstract**

Provided are a vehicle power supply system and a vehicle. The vehicle power supply system (100) includes: at least one mutually independent battery swap box (10), each battery swap box (10) including a battery pack (11), a secondary high-voltage box (12) and a secondary quick-swap connector (13), and the secondary high-voltage box (12) being separately connected to the corresponding battery pack (11) and secondary quick-swap connector (13); and a primary high-voltage box (20), the primary high-voltage box (20) being connected to a plurality of primary quick-swap connectors (30), each primary quick-swap connector (30) being adapted to connect to one secondary quick-swap connector (13), wherein when the primary quick-swap connector (30) is connected to the secondary quick-swap connector (13), the primary high-voltage box (20) and the secondary high-voltage box (12) perform information interaction, and transmit electrical energy of the battery pack (11) to a power supply interface (21) of the primary high-voltage box (20) or transmit electrical energy of a charging interface (22) of the primary high-voltage box (20) to the battery pack (11).

## Description

### CROSS-REFERENCE TO RELATED APPLICATIONS

The present disclosure claims priority to Chinese Patent Application No. 202323594398.X, entitled "VEHICLE POWER SUPPLY SYSTEM AND VEHICLE" and filed on December 26, 2023, the entire content of which is incorporated herein by reference.

### TECHNICAL FIELD

The present disclosure relates to the technical field of vehicles, and in particular, to a vehicle power supply system and a vehicle.

### BACKGROUND

In the related art, a vehicle power supply system includes several battery swap boxes and an on-board high-voltage box. Each of the battery swap boxes is connected to the on-board high-voltage box, so as to complete charging and discharging control of the battery swap box via the on-board high-voltage box.

However, in the power supply system described above, the battery swap boxes are fixedly connected to each other, so that during a battery swap process, all the battery swap boxes in the system need to be synchronously and integrally replaced, and at the same time, limited options for selecting battery swap capacity levels are available, which reduces user experience.

### SUMMARY OF THE INVENTION

In view of the aforementioned problems, the present disclosure provides a vehicle power supply system and a vehicle. Battery swap boxes are designed to be mutually independent, allowing a user to select a capacity level according to requirements, thereby improving the spatial flexibility and the application reliability of the battery swap boxes. Meanwhile, during a battery swap process, the user can also perform a battery swap operation on one or more of the battery swap boxes, improving the battery swap flexibility. Furthermore, the junction box and the control box of the battery swap box in the related art are integratedly designed, improving the system integration degree and the space utilization, and reducing harness and connector costs, thereby providing advantages such as maintainability, wide applicability, and high safety and reliability.

In a first aspect, the present disclosure provides a vehicle power supply system and a vehicle. The power supply system includes: at least one mutually independent battery swap box, each battery swap box including a battery pack, a secondary high-voltage box, and a secondary quick-swap connector, where the secondary high-voltage box is separately connected to the corresponding battery pack and secondary quick-swap connector; and a primary high-voltage box, the primary high-voltage box being connected with a plurality of primary quick-swap connectors, where each of the primary quick-swap connectors is adapted to connect to one of the secondary quick-swap connectors, where in a case where the primary quick-swap connector is connected to the secondary quick-swap connector, the primary high-voltage box and the secondary high-voltage box perform information interaction, and transmit electrical energy of the battery pack to a power supply interface of the primary high-voltage box or transmit electrical energy of a charging interface of the primary high-voltage box to the battery pack.

In the technical solutions of the embodiments of the present disclosure, the battery swap boxes are mutually independent, allowing a user to select a capacity level according to requirements, thereby improving the spatial flexibility and the application reliability of the battery swap boxes. Meanwhile, during a battery swap process, the user can also perform a battery swap operation on one or more of the battery swap boxes, improving the battery swap flexibility. Furthermore, within each battery swap box, the battery pack is connected to the secondary quick-swap connector via the secondary high-voltage box. In a case where the primary high-voltage box is connected to the secondary quick-swap connector of the battery swap box via the primary quick-swap connector, the battery pack can be connected to the power supply interface of the primary high-voltage box via the secondary high-voltage box, the secondary quick-swap connector, and the primary quick-swap connector, so as to establish a power supply loop to supply power to a load; or the battery pack is connected to the charging interface of the primary high-voltage box via the secondary high-voltage box, the secondary quick-swap connector, and the primary quick-swap connector, so as to establish a charging loop, allowing an external power source to charge the battery pack via the charging loop. Meanwhile, in a case where the primary quick-swap connector is connected to the secondary quick-swap connector, the primary high-voltage box and the secondary high-voltage box perform information interaction to perform charging and discharging control. That is to say, the secondary high-voltage box in each battery swap box has both wiring and control functions, meaning that the present disclosure integrates the junction box and the control box within the battery swap box of the related art. Compared to the separate design of the junction box and the control box in the related art, the system integration degree and the space utilization are improved, and the harness and connector costs are reduced.

In some embodiments, the primary high-voltage box includes: a primary positive direct current (DC) bus, one end of the primary positive DC bus being separately connected to high-voltage positive interfaces of the plurality of primary quick-swap connectors, and the other end of the primary positive DC bus being separately connected to at least one main power supply positive interface of the primary high-voltage box; and a primary negative DC bus, one end of the primary negative DC bus being separately connected to high-voltage negative interfaces of the plurality of primary quick-swap connectors, and the other end of the primary negative DC bus being separately connected to at least one main power supply negative interface of the primary high-voltage box, where the at least one main power supply positive interface and the at least one main power supply negative interface are adapted to be connected to a main power supply loop of the vehicle, so as to supply power to a main high-voltage load of the vehicle via the battery pack.

In this embodiment, the main power supply positive interface and the main power supply negative interface are directly connected to the primary positive DC bus and the primary negative DC bus. There are no relays and pre-charging loops in the main loop, reducing the cost of the primary high-voltage box.

In some embodiments, the primary high-voltage box further includes: at least one charging positive relay, one end of the at least one charging positive relay being separately connected to the other end of the primary positive DC bus, and the other end of the at least one charging positive relay being separately correspondingly connected to at least one charging positive interface of the primary high-voltage box; and at least one charging negative relay, one end of the at least one charging negative relay being separately connected to the other end of the primary negative DC bus, and the other end of the at least one charging negative relay being separately correspondingly connected to at least one charging negative interface of the primary high-voltage box, where the at least one charging positive interface and the at least one charging negative interface are adapted to be connected to a charging loop of a charging device, so as to charge the battery pack via the charging device.

Based on a charging instruction, the primary high-voltage box can control the charging positive relay and the charging negative relay to close, so that the charging loop is conducted, allowing the battery pack to be charged via the charging device. When charging is completed or charging conditions are not satisfied, the primary high-voltage box can control the charging positive relay and the charging negative relay to open, so that the charging loop is in an open state, allowing no charging operation to be performed.

In some embodiments, the primary high-voltage box further includes: an auxiliary relay and a first high-voltage protection module, one end of the auxiliary relay being connected to the other end of the primary positive DC bus, and the other end of the auxiliary relay being connected to an auxiliary power supply positive interface of the primary high-voltage box via the first high-voltage protection module, and the other end of the primary negative DC bus being further connected to an auxiliary power supply negative interface of the primary high-voltage box, where the auxiliary power supply positive interface and the auxiliary power supply negative interface are adapted to be connected to an auxiliary power supply loop of the vehicle, so as to supply power to an auxiliary high-voltage load of the vehicle via the battery pack.

In the case where the power supply system supplies power to the auxiliary high-voltage load, the first high-voltage protection module provides high-voltage power supply protection for the power supply loop to enhance electrical safety.

In some embodiments, the first high-voltage protection module includes a fuse, so as to disconnect power supply when a current on the power supply line for supplying power to the auxiliary high-voltage load exceeds a current threshold.

In some embodiments, the primary high-voltage box further includes: a second high-voltage protection module, the second high-voltage protection module being connected in series on the primary positive DC bus, so as to provide high-voltage protection for the primary DC bus.

In some embodiments, the second high-voltage protection module includes a fuse and a manual service disconnect.

The fuse can, when a current on the primary positive DC bus exceeds a preset current threshold, disconnect the power supply of the primary positive DC bus to perform high-voltage protection. The manual service disconnect can be manually controlled by an operator. For example, in a case where circuit maintenance is required or a circuit needs to be urgently cut off, the operator controls the manual service disconnect to open, so that the primary positive DC bus is in an open state, achieving power-off control; and when electrical energy recovery is needed, the operator controls the manual service disconnect to close, so that the primary positive DC bus resumes power supply.

In some embodiments, the primary high-voltage box further includes: a primary battery management unit, the primary battery management unit being separately connected to the at least one charging positive relay, the at least one charging negative relay, and the auxiliary relay, so as to perform on/off control on the at least one charging positive relay, the at least one charging negative relay, and the auxiliary relay, and being separately connected to low-voltage interfaces of the plurality of primary quick-swap connectors to perform information interaction with the secondary high-voltage box, and being connected to a low-voltage interface of the primary high-voltage box to perform information interaction with a first external device. That is, the primary battery management unit can implement functions such as charging/discharging control and information interaction.

In some embodiments, the primary high-voltage box further includes: a primary high-voltage acquisition unit configured to acquire a primary DC bus voltage for fault diagnosis, where the primary battery management unit is further connected to the primary high-voltage acquisition unit via a first primary communication bus, and is configured to receive a fault diagnosis result from the primary high-voltage acquisition unit.

The primary battery management unit can control the primary DC bus based on the fault diagnosis result from the primary high-voltage acquisition unit, and can also send the fault diagnosis result to an external device for high-voltage protection.

In some embodiments, the primary high-voltage box further includes: a primary wireless communication unit, the primary battery management unit being further connected to the primary wireless communication unit via a first primary communication bus, so as to perform information interaction with a second external device via the primary wireless communication unit; and/or a primary remote debugging bridge, the primary battery management unit being further connected to the primary remote debugging bridge via a second primary communication bus, so as to perform information interaction with a remote device via the primary remote debugging bridge.

The primary battery management unit can perform information interaction with the second external device based on wireless communication via the primary wireless communication unit; and the primary battery management unit can perform network connection with the remote device based on the primary remote debugging bridge, so that a developer can perform debugging operations on the primary battery management unit.

In some embodiments, the battery pack includes: at least one battery cell module, the at least one battery cell module being connected in series and/or in parallel and then connected to a high-voltage interface of the corresponding secondary high-voltage box via a high-voltage interface of the battery pack, and being configured to provide electrical energy; and at least one battery monitoring unit, the at least one battery monitoring unit being connected to a low-voltage interface of the corresponding secondary high-voltage box via a low-voltage interface of the battery pack, and being configured to monitor the at least one battery cell module and send a monitoring result to the corresponding secondary high-voltage box.

In this embodiment, the battery cell module and the battery monitoring unit are integrated within the battery pack, and the battery monitoring unit performs state monitoring on the battery cell module to improve monitoring reliability.

In some embodiments, the secondary high-voltage box includes: a secondary positive DC bus and a secondary positive relay, one end of the secondary positive DC bus being connected to a high-voltage positive interface of the secondary high-voltage box, and the other end of the secondary positive DC bus being connected to a high-voltage positive interface of the corresponding secondary quick-swap connector, and the secondary positive relay being connected in series on the secondary positive DC bus; and a secondary negative DC bus and a secondary negative relay, one end of the secondary negative DC bus being connected to a high-voltage negative interface of the secondary high-voltage box, and the other end of the secondary negative DC bus being connected to a high-voltage negative interface of the corresponding secondary quick-swap connector, and the secondary negative relay being connected in series on the secondary negative DC bus.

By controlling the secondary positive relay and the secondary negative relay to close, the secondary positive DC bus and the secondary negative DC bus are placed in a conductive state to perform a charging and discharging process; and by controlling the secondary positive relay and the secondary negative relay to open, the secondary positive DC bus and the secondary negative DC bus are placed in an open state to stop the charging and discharging process.

In some embodiments, the secondary high-voltage box further includes: a third high-voltage protection module, the third high-voltage protection module being connected in series on the secondary positive DC bus, so as to provide high-voltage protection for the secondary DC bus via the third high-voltage protection module.

In some embodiments, the third high-voltage protection module includes a fuse and a manual service disconnect.

The fuse can, when a current on the secondary positive DC bus exceeds a preset current threshold, disconnect the secondary positive DC bus to perform high-voltage protection. The manual service disconnect can be manually controlled by an operator to connect or disconnect the secondary positive DC bus to meet actual requirements.

In some embodiments, the secondary high-voltage box further includes: a secondary battery management unit, the secondary battery management unit being separately connected to the secondary positive relay and the secondary negative relay, so as to perform on/off control on the secondary positive relay and the secondary negative relay, and being connected to a low-voltage interface of the secondary high-voltage box via a first secondary communication bus to perform information interaction with the battery pack, and being connected to a low-voltage interface of the corresponding secondary quick-swap connector to perform information interaction with the primary high-voltage box, so as to integrate the junction box and the control box in the related art into the secondary battery management unit, thereby improving the system integration degree and reducing the application costs.

In some embodiments, the secondary high-voltage box further includes: a secondary high-voltage acquisition unit configured to acquire a secondary DC bus voltage for fault diagnosis, where the secondary battery management unit is further connected to the secondary high-voltage acquisition unit via the first secondary communication bus, and is configured to receive a fault diagnosis result from the secondary high-voltage acquisition unit.

The secondary battery management unit can control on/off of the secondary DC bus based on the fault diagnosis result from the secondary high-voltage acquisition unit to perform fault protection actions. Additionally, the secondary battery management unit can also send the fault diagnosis result of the secondary high-voltage acquisition unit to the primary high-voltage box.

In some embodiments, the secondary high-voltage box further includes: a secondary wireless communication unit, the secondary battery management unit being further connected to the secondary wireless communication unit via the first secondary communication bus, so as to perform information interaction with a second external device via the secondary wireless communication unit; and/or a positioning unit, the secondary battery management unit being further connected to the positioning unit via a second secondary communication bus, so as to obtain position information of the secondary high-voltage box via the positioning unit; and/or a secondary remote debugging bridge, the secondary battery management unit being further connected to the secondary remote debugging bridge via the second secondary communication bus, so as to perform information interaction with a remote device via the secondary remote debugging bridge.

The secondary battery management unit can perform information interaction with the second external device based on wireless communication via the secondary wireless communication unit. The secondary battery management unit can obtain the position information of the distribution box in real time via the positioning unit, so as to facilitate feedback of the position information during the battery swap process. The secondary battery management unit establishes a network connection with the remote device via the secondary remote debugging bridge, so that the developer can perform debugging operations on programs on the secondary battery management unit based on the remote device.

In some embodiments, the secondary high-voltage box further includes: a current detection unit configured to detect a secondary DC bus current, where the secondary battery management unit is further connected to the current detection unit to receive the secondary DC bus current, so as to achieve current detection of the secondary DC bus.

In some embodiments, each battery swap box further includes: a water-cooled heat exchange assembly, the water-cooled heat exchange assembly being adapted to be connected to an external water cooling device via a water cooling interface of the battery swap box, and being configured to perform heat exchange on the battery swap box based on hot water or cold water provided by the external water cooling device. Compared to technical solutions using heating elements for heat exchange, the harness arrangement cost is reduced.

In a second aspect, the present disclosure provides a vehicle, including the aforementioned vehicle power supply system.

The above description is only a summary of the technical solutions of the present disclosure, and in order to understand more clearly the technical means of the present disclosure for implementing in accordance with the contents of the specification, and in order to make the above and other objects, features and advantages of the present disclosure more apparent and readily understandable, detailed description of the present disclosure are hereby set forth below.

### BRIEF DESCRIPTION OF THE DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present disclosure. Moreover, in all of the accompanying drawings, the same components are indicated by the same reference numerals. In the drawings:
FIG. 1 is a schematic connection diagram of a vehicle power supply system according to some embodiments of the present disclosure;
FIG. 2 is a schematic connection diagram of a vehicle power supply system according to some embodiments of the present disclosure;
FIG. 3 is a schematic connection diagram of a primary high-voltage box according to some embodiments of the present disclosure;
FIG. 4 is a schematic connection diagram of a primary battery management unit according to some embodiments of the present disclosure;
FIG. 5 is a schematic connection diagram of a battery swap box according to some embodiments of the present disclosure;
FIG. 6 is a schematic connection diagram of a secondary battery management unit according to some embodiments of the present disclosure; and
FIG. 7 is a schematic block diagram of a vehicle according to some embodiments of the present disclosure.

Reference numerals:
vehicle power supply system 100, battery swap box 10, battery pack 11, battery cell module 111, high-voltage interface 112 of the battery pack, battery monitoring unit 113, low-voltage interface 114 of the battery pack, secondary high-voltage box 12, high-voltage interface 121 of the secondary high-voltage box, low-voltage interface 122 of the secondary high-voltage box, third high-voltage protection module 123, secondary battery management unit 124, secondary high-voltage acquisition unit 125, secondary wireless communication unit 126, positioning unit 127, secondary remote debugging bridge 128, current detection unit 129, secondary quick-swap connector 13, high-voltage positive interface 131 of the secondary quick-swap connector, high-voltage negative interface 132 of the secondary quick-swap connector, low-voltage interface 133 of the secondary quick-swap connector, water-cooled heat exchange assembly 14, water cooling interface 15 of the battery swap box, primary high-voltage box 20, power supply interface 21, main power supply positive interface 211, main power supply negative interface 212, auxiliary power supply positive interface 213, auxiliary power supply negative interface 214, charging interface 22, charging positive interface 221, charging negative interface 222, first high-voltage protection module 23, second high-voltage protection module 24, primary battery management unit 25, low-voltage interface 26 of the primary high-voltage box, primary high-voltage acquisition unit 27, primary wireless communication unit 28, primary remote debugging bridge 29, primary quick-swap connector 30, high-voltage positive interface 31 of the primary quick-swap connector, high-voltage negative interface 32 of the primary quick-swap connector, low-voltage interface 33 of the primary quick-swap connector, first external device 200, second external device 300, remote device 400, external water cooling device 500, vehicle 1000.

### DETAILED DESCRIPTION

Embodiments of the technical solutions of the present disclosure will be described in detail below in conjunction with the drawings. The following examples are only used to illustrate the technical solutions of the present disclosure more clearly, and are therefore used only as examples, and should not be used to limit the protection scope of the present disclosure.

Unless otherwise defined, all technical and scientific terms used herein have the same meaning as commonly understood by those skilled in the art to which the present disclosure belongs; the terms used herein are for the purpose of describing specific embodiments only, and are not intended to limit the present disclosure; the terms "including" and "having" and any variations thereof in the description and claims of the present disclosure as well as in the above description of drawings are intended to cover a non-exclusive inclusion.

In the description of the examples of the present disclosure, the technical terms "first", "second", and the like are used only to distinguish between different objects, and are not to be understood as indicating or implying a relative importance or implicitly specifying the number, particular order, or primary and secondary relation of the technical features indicated. In the description of the examples of the present disclosure, the meaning of "plurality of" is two or more, unless otherwise expressly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the examples of the present disclosure, the term "and/or" is only an association relationship for describing associated objects, indicating that three relationships may exist. For example, A and/or B may represent three situations: A exists alone, both A and B exist, and B exists alone. In addition, the character "/" herein generally means that the associated objects before and after it are in an "or" relationship.

In the description of the examples of the present disclosure, the term "plurality of" refers to two or more (including two), and similarly, "multiple groups" refers to two or more (including two) groups, and "multiple sheets" refers to two or more (including two) sheets.

In the description of the examples of the present disclosure, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on the orientations or positional relationships shown in the drawings, and are intended only to facilitate and simplify the description of the examples of the present disclosure, and are not intended to indicate or imply that a device or element referred to must have a particular orientation, be constructed and operated in a particular orientation, and therefore should not be construed as limiting the examples of the present disclosure.

In the description of the embodiments of the present disclosure, unless otherwise explicitly specified and defined, the technical terms such as "mount", "connect", "connection", and "fix" should be understood in a broad sense. For example, the connection may be a fixed connection, a detachable connection, or an integrated connection, may be a mechanical connection or an electrical connection, or may be a direct connection, an indirect connection through an intermediate, an internal communication between two elements, or an interaction relationship between two elements. For those of ordinary skills in the art, the specific meanings of the above terms in the embodiments of the present disclosure may be understood based on specific situations.

In the related art, a vehicle power supply system includes a plurality of battery swap boxes and an on-board high-voltage box. All the battery swap boxes are fixedly connected to each other, and a junction box and a control box in each battery swap box are independently designed, so as to respectively complete wiring and control functions within the corresponding battery swap box via the junction box and the control box. During the application process, each battery swap box is connected to the on-board high-voltage box, so as to complete charging and discharging control of the battery swap box via the on-board high-voltage box.

However, in the aforementioned power supply system, the battery swap boxes are fixedly connected to each other, so that during a battery swap process, the vehicle needs to keep the number of battery swap boxes consistent with the original target number, which limits the selection of battery swap capacity levels, reducing the user experience. Meanwhile, the independent design of the junction box and the control box results in an insufficient integration degree of the entire system and low space utilization, and increases harness and connector costs, and additionally, the control box and the junction box also need to be connected via low-voltage harnesses, which reduces the reliability of communication, and further increases the number of connection nodes within the battery swap box, increasing reliability risks of high-voltage connection and low-voltage communication, and resulting in higher costs.

To address the aforementioned technical problems, the present disclosure proposes a vehicle power supply system. In this system, battery swap boxes are designed to be mutually independent, allowing a user to select a capacity level according to requirements, thereby improving the spatial flexibility and the application reliability of the battery swap boxes. Meanwhile, during a battery swap process, the user can also perform a battery swap operation on one or more of the battery swap boxes, improving the battery swap flexibility. Furthermore, the junction box and the control box of the battery swap box in the related art are integratedly designed, improving the system integration degree and the space utilization, and reducing harness and connector costs, thereby providing advantages such as maintainability, wide applicability, and high safety and reliability.

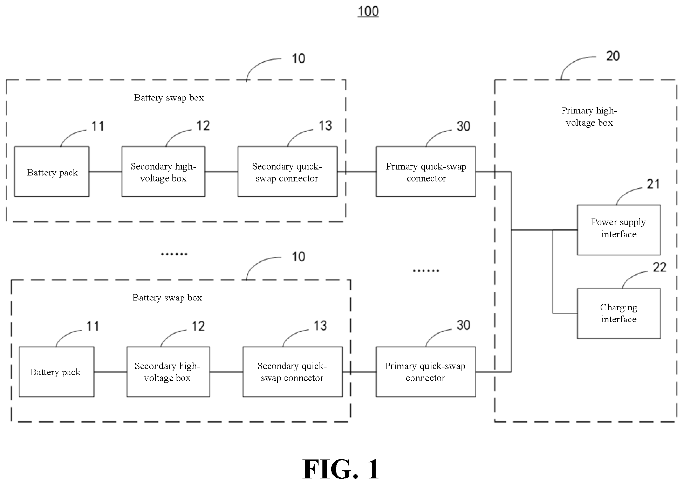

The vehicle power supply system of the present disclosure will be described below in conjunction with FIG. 1.

As shown in FIG. 1, the vehicle power supply system 100 of the present disclosure includes: at least one mutually independent battery swap box 10 and a primary high-voltage box 20. Each battery swap box 10 includes a battery pack 11, a secondary high-voltage box 12, and a secondary quick-swap connector 13, where the secondary high-voltage box 12 is separately connected to the corresponding battery pack 11 and secondary quick-swap connector 13. The primary high-voltage box 20 is connected with a plurality of primary quick-swap connectors 30, where each of the primary quick-swap connectors 30 is adapted to connect to one of the secondary quick-swap connectors 13. Herein, in a case where the primary quick-swap connector 30 is connected to the secondary quick-swap connector 13, the primary high-voltage box 20 and the secondary high-voltage box 12 perform information interaction, and transmit electrical energy of the battery pack 11 to a power supply interface 21 of the primary high-voltage box 20 or transmit electrical energy of a charging interface 22 of the primary high-voltage box 20 to the battery pack 11.

The battery pack 11 is a battery structure composed of several battery cells connected in parallel and/or in series, which is used for energy storage. Each battery swap box 10 includes a battery pack 11, a secondary high-voltage box 12, and a secondary quick-swap connector 13. The secondary quick-swap connector 13 may be a national standard DC charging socket, which may include a high-voltage electrical interface, a low-voltage communication interface, an insulation detection resistor, etc. Within each battery swap box 10, the battery pack 11 is connected to the secondary quick-swap connector 13 via the secondary high-voltage box 12. That is to say, the secondary high-voltage box 12 can realize the wiring function between the battery pack 11 and the secondary quick-swap connector 13. Specifically, it can realize the function of controlling the on/off of the wiring between the battery pack 11 and the secondary quick-swap connector 13. In addition, the secondary high-voltage box 12 can also realize state monitoring of the battery swap box 10, for example, state monitoring of the battery pack 11, current monitoring between the battery pack 11 and the secondary quick-swap connector 13, voltage monitoring between the battery pack 11 and the secondary quick-swap connector 13, temperature monitoring of multiple sampling points within the battery swap box 10, and on/off-state monitoring, without limitation here.

The battery swap boxes 10 in the power supply system are mutually independent, so the user can operate the battery swap boxes 10 individually, i.e., achieving flexible configuration of the battery swap box 10. For example, one battery swap box 10, two battery swap boxes 10, etc. may be configured. In addition, during a battery swap process, the user can perform a battery swap operation on one or more of the battery swap boxes 10, thereby improving the battery swap flexibility.

The primary quick-swap connector 30 is a DC charging socket adapted to the secondary quick-swap connector 13, which may include a high-voltage electrical interface, a low-voltage communication interface, etc. corresponding to the secondary quick-swap connector 13. When the primary quick-swap connector 30 is connected to the secondary quick-swap connector 13, the high-voltage electrical interface of the primary quick-swap connector 30 is connected to the high-voltage electrical interface of the secondary quick-swap connector 13 to establish a power supply path; and the low-voltage communication interface of the primary quick-swap connector 30 is connected to the low-voltage communication interface of the secondary quick-swap connector 13 to establish a low-voltage communication channel.

The primary high-voltage box 20 is connected with a plurality of primary quick-swap connectors 30, and separately establishes power supply and communication connections with the secondary quick-swap connector 13 of the battery swap box 10 via the primary quick-swap connectors 30. The primary high-voltage box 20 is connected with a plurality of primary quick-swap connectors 30. The user can configure the battery swap box 10 according to actual power demand. For example, if a vehicle can be configured with one battery swap box 10, the primary high-voltage box 20 is connected to the secondary quick-swap connector 13 of the configured battery swap box 10 via one of the plurality of primary quick-swap connectors 30; and in a case where two battery swap boxes 10 are configured, the primary high-voltage box 20 is separately connected to the secondary quick-swap connectors 13 of the two configured battery swap boxes 10 via two of the plurality of primary quick-swap connectors 30.

In the case where the vehicle is configured with two battery swap boxes 10, the secondary quick-swap connectors 13 of the two battery swap boxes 10 are respectively connected to the two primary quick-swap connectors 30 connected to the primary high-voltage box 20. At this time, the battery packs 11 within the two battery swap boxes 10 establish connections with the power supply interface 21 and the charging interface 22 of the primary high-voltage box 20 via the secondary high-voltage box 12, the secondary quick-swap connector 13, and the corresponding primary quick-swap connector 30. Meanwhile, the primary high-voltage box 20 establishes information interaction with the secondary high-voltage box 12. Thus, based on the information interaction between the primary high-voltage box 20 and the secondary high-voltage box 12, for example, the secondary high-voltage box 12 can send state monitoring information of the battery swap box 10 to the primary high-voltage box 20, and the primary high-voltage box 20 can control each battery swap box 10 based on the state monitoring information of each battery swap box 10 and the received control instructions, so as to achieve charging and discharging control of the battery packs 11 of the battery swap boxes 10. Specifically, when the primary high-voltage box 20 receives a power supply instruction and determines, based on the state monitoring information of each battery swap box 10, that the battery swap box 10 is normal, the primary high-voltage box 20 can send the received power supply instruction to the secondary high-voltage box 12 of the distribution box 10, control the battery pack 11 via the secondary high-voltage box 12 to discharge, and then output electrical energy of the battery pack 11 via the power supply interface 21 to supply power to a load connected to the power supply interface 21; and when the primary high-voltage box 20 receives a charging instruction and determines, based on the state monitoring information of each battery swap box 10, that the battery swap box 10 is normal, the primary high-voltage box 20 can send the received charging instruction to the secondary high-voltage box 12 of the distribution box 10, control the battery pack 11 via the secondary high-voltage box 12, so as to charge the battery pack 11 with electrical energy provided by an external power source connected via the charging interface 22.

Thus, the secondary high-voltage box 12 in this embodiment not only has a wiring function but also has a control function, achieving integration of the junction box and the control box in the related art, thereby improving the system integration degree and reducing costs. Meanwhile, the battery swap boxes 10 are mutually independent. Compared to the existing solutions where the battery swap boxes are connected together, it is possible to select the number of battery swap boxes 10 to use according to actual user requirements, thereby improving the configuration flexibility and the battery swap flexibility.

It should be noted that the secondary quick-swap connector 13 can adopt a national standard DC charging socket interface, then the primary quick-swap connector 303 is a national standard DC charging socket interface adapted to the secondary quick-swap connector 13. Thus, the vehicle power supply system can connect to an external power source via the charging interface 22 of the primary high-voltage box 20 to charge the battery pack 11 in the system, or can be connected to a charging connector of an external charging device via the secondary quick-swap connector 13 of the battery swap box 10 after the battery swap box 10 is swapped off at a battery swap station, so as to directly perform DC charging on the battery swap box 10 via the external device.

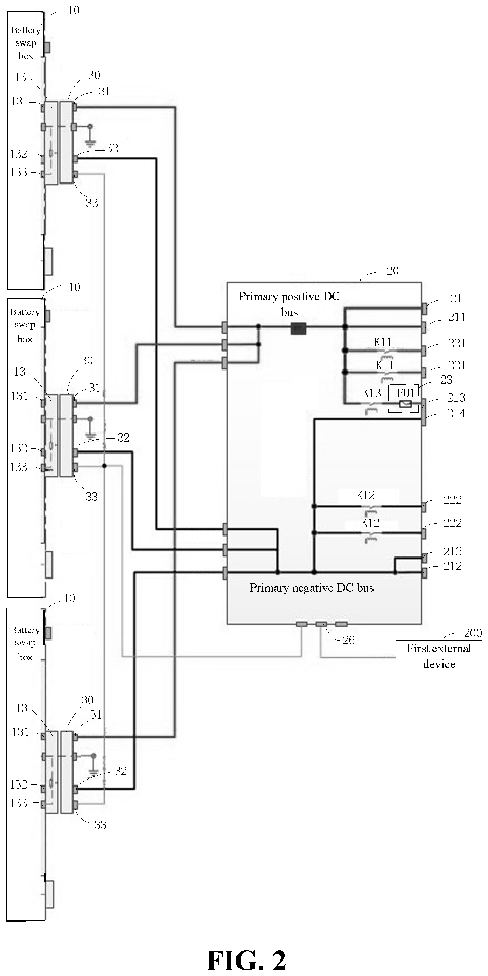

In conjunction with FIG. 2, in some embodiments, the primary high-voltage box 20 includes: a primary positive DC bus, one end of the primary positive DC bus being separately connected to high-voltage positive interfaces 31 of the plurality of primary quick-swap connectors, and the other end of the primary positive DC bus being separately connected to at least one main power supply positive interface 211 of the primary high-voltage box 20; and a primary negative DC bus, one end of the primary negative DC bus being separately connected to high-voltage negative interfaces 32 of the plurality of primary quick-swap connectors, and the other end of the primary negative DC bus being separately connected to at least one main power supply negative interface 212 of the primary high-voltage box 20, where the at least one main power supply positive interface 211 and the at least one main power supply negative interface 212 are adapted to be connected to a main power supply loop of the vehicle, so as to supply power to a main high-voltage load of the vehicle via the battery pack 11.

The high-voltage positive interfaces 31 of the plurality of primary quick-swap connectors are connected to high-voltage positive interfaces 131 of the corresponding secondary quick-swap connectors, and the high-voltage negative interfaces 32 of the plurality of primary quick-swap connectors are connected to high-voltage negative interfaces 132 of the corresponding secondary quick-swap connectors, so as to form a power supply loop to receive electrical energy from the corresponding battery swap box 10. In the embodiment shown in FIG. 2, the power supply system includes three battery swap boxes 10. The primary high-voltage box 20 is connected to the secondary quick-swap connectors 13 of the battery swap boxes 10 via the primary quick-swap connectors 30. The three battery swap boxes 10 supply power in parallel to transmit electrical energy of the battery swap boxes 10 to the primary positive DC bus and the primary negative DC bus of the primary high-voltage box 20.

The main high-voltage load may be set according to the operational requirements of the vehicle. For example, the main high-voltage load is a drive motor, a compressor, etc. of the vehicle. A corresponding main power supply loop can be configured according to the set number of main high-voltage loads, and main power supply positive interfaces 211 and main power supply negative interfaces 212 for supplying power to the main power supply loop can be further configured. As shown in FIG. 2, the primary high-voltage box 20 is configured with two main power supply positive interfaces 211 and two main power supply negative interfaces 212. The two main power supply positive interfaces 211 and the two main power supply negative interfaces 212 are respectively connected to power supply ends of two main power supply loops, i.e., one main power supply positive interface 211 and one main power supply negative interface 212 are connected to a power supply end of one main power supply loop; and the other main power supply positive interface 211 and the other main power supply negative interface 212 are connected to a power supply end of the other main power supply loop.

Electrical energy provided by each battery swap box 10 is transmitted to the primary positive DC bus and the primary negative DC bus of the primary high-voltage box 20, and then power is drawn from the primary positive DC bus and the primary negative DC bus via the main power supply positive interfaces 211 and the main power supply negative interfaces 212 to supply power to the main power supply loop.

In this embodiment, the main power supply positive interface 211 and the main power supply negative interface 212 are directly connected to the primary positive DC bus and the primary negative DC bus. There are no relays and pre-charging loops in the main loop, reducing the cost of the primary high-voltage box 20.

In some embodiments, the primary high-voltage box 20 further includes: at least one charging positive relay K11, one end of the at least one charging positive relay K11 being separately connected to the other end of the primary positive DC bus, and the other end of the at least one charging positive relay K11 being separately correspondingly connected to at least one charging positive interface 221 of the primary high-voltage box 20; and at least one charging negative relay K12, one end of the at least one charging negative relay K12 being separately connected to the other end of the primary negative DC bus, and the other end of the at least one charging negative relay K12 being separately correspondingly connected to at least one charging negative interface 222 of the primary high-voltage box 20, where the at least one charging positive interface 221 and the at least one charging negative interface 222 are adapted to be connected to a charging loop of a charging device, so as to charge the battery pack 11 via the charging device.

Taking FIG. 2 as an example, the primary high-voltage box 20 includes two charging positive interfaces 221 and two charging negative interfaces 222, which can respectively correspond to two charging guns of an external charging device, or can be configured corresponding to one charging gun of an external charging device, without limitation here. The two charging positive interfaces 221 are respectively connected to the primary positive DC bus via the corresponding charging positive relays K11, and the two charging negative interfaces 222 are respectively connected to the primary negative DC bus via the corresponding charging negative relays K12. After a charging interface of the external charging device establishes a connection with the charging positive interface 221 and the charging negative interface 222 of the primary high-voltage box 20, the primary high-voltage box 20 controls the charging positive relay K11 and the charging negative relay K12 to close, so that the charging loop is conducted, allowing the battery pack 11 to be charged via the charging device. When charging is completed or charging conditions are not satisfied, the primary high-voltage box 20 controls the charging positive relay K11 and the charging negative relay K12 to open, so that the charging loop is in an open state, allowing no charging operation to be performed.

Specifically, a charging loop can be selected based on the charging requirements and the connection of the charging interfaces to control the charging positive relay K11 and the charging negative relay K12. For example, when only one charging positive interface 221 and one charging negative interface 222 are connected to the external charging device, the corresponding charging positive relay K11 and charging negative relay K12 can be controlled to close to perform charging via the one charging positive interface 221 and the one charging negative interface 222; and when both of the two charging positive interfaces 221 and both of the two charging negative interfaces 222 are connected to the external charging device, if the charging demand is large, both charging positive relays K11 and both charging negative relays K12 can be controlled to close to perform charging via the two sets of charging positive interfaces 221 and charging negative interfaces 222; if the charging demand is small, one of the charging positive relays K11 and one of the charging negative relays K12 can be controlled to close to perform a charging process via one set of charging positive interface 221 and charging negative interface 222.

In some embodiments, the primary high-voltage box 20 further includes: an auxiliary relay K13 and a first high-voltage protection module 23, one end of the auxiliary relay K13 being connected to the other end of the primary positive DC bus, and the other end of the auxiliary relay K3 being connected to an auxiliary power supply positive interface 213 of the primary high-voltage box 20 via the first high-voltage protection module 23, and the other end of the primary negative DC bus being further connected to an auxiliary power supply negative interface 214 of the primary high-voltage box 20, where the auxiliary power supply positive interface 213 and the auxiliary power supply negative interface 214 are adapted to be connected to an auxiliary power supply loop of the vehicle, so as to supply power to an auxiliary high-voltage load of the vehicle via the battery pack 11.

Specifically, the auxiliary high-voltage load may be set based on the operational requirements of the vehicle. For example, the auxiliary high-voltage load is a water pump, a compressor, etc. of a vehicle water cooling system.

The auxiliary power supply loop of the vehicle draws power from the primary positive DC bus and the primary negative DC bus via the auxiliary power supply positive interface 213 and the auxiliary power supply negative interface 214 to supply power to the auxiliary high-voltage load. During the power supply process, the primary high-voltage box 20 can control the auxiliary relay K13 according to actual conditions. For example, when it is determined that the power supply system has sufficient electrical energy, the auxiliary relay K13 is controlled to close to supply power to the auxiliary high-voltage load; when it is determined that the electrical energy of the power supply system is low, the auxiliary relay K13 is controlled to open to stop supplying power to the auxiliary high-voltage load, so that the power supply system prioritizes supplying power to the main high-voltage load of the vehicle to meet the operational requirements of the vehicle. The specific electrical energy situation may be obtained based on communication with the secondary high-voltage box 12.

In addition, in the case where the power supply system supplies power to the auxiliary high-voltage load, the first high-voltage protection module 23 provides power supply protection for the power supply loop. For example, when a voltage exceeds a preset voltage, the power supply is controlled to be disconnected.

In some embodiments of the present disclosure, the first high-voltage protection module 23 includes a fuse FU1. The fuse FU1 can disconnect the power supply when a current on the power supply line exceeds a current threshold.

In some embodiments of the present disclosure, the primary high-voltage box 20 further includes: a second high-voltage protection module 24, the second high-voltage protection module 24 being connected in series on the primary positive DC bus. To provide overvoltage and overcurrent protection for the primary DC bus. For example, the second high-voltage protection module 24 may include a fuse FU2. The fuse FU2 can, when a current on the primary positive DC bus exceeds a preset current threshold, disconnect the primary positive DC bus.

In some embodiments of the present disclosure, the second high-voltage protection module 24 includes a fuse FU2 and a manual service disconnect K14.

The fuse FU2 can, when a current on the primary positive DC bus exceeds a preset current threshold, control disconnection of the primary positive DC bus. The manual service disconnect K14 can be manually controlled by an operator. For example, in a case where circuit maintenance is required or a circuit needs to be urgently cut off, the operator controls the manual service disconnect K14 to open, so that the primary positive DC bus is in an open state, achieving power-off control. When electrical energy recovery is needed, the operator controls the manual service disconnect K14 to close, so that the primary positive DC bus resumes power supply.

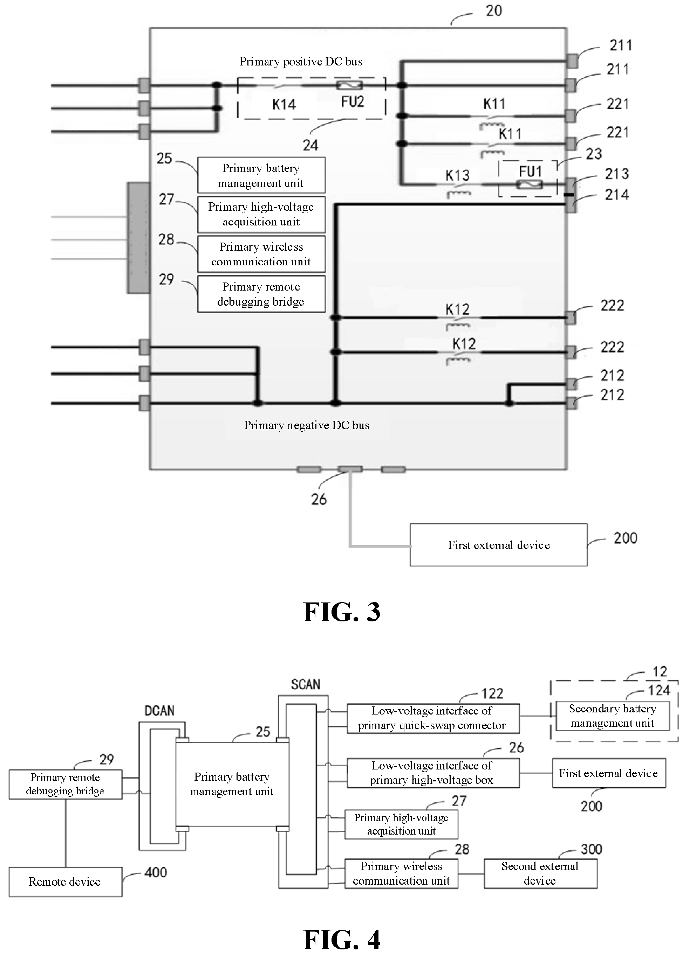

In conjunction with FIG. 3, in some embodiments, the primary high-voltage box 20 further includes: a primary battery management unit 25, the primary battery management unit 25 being separately connected to the at least one charging positive relay K11, the at least one charging negative relay K12, and the auxiliary relay K13, so as to perform on/off control on the at least one charging positive relay K11, the at least one charging negative relay K12, and the auxiliary relay K13, and being separately connected to low-voltage interfaces 33 of the plurality of primary quick-swap connectors to perform information interaction with the secondary high-voltage box 12, and being connected to a low-voltage interface 26 of the primary high-voltage box to perform information interaction with a first external device 200.

The low-voltage interfaces 33 of the plurality of primary quick-swap connectors are connected to low-voltage interfaces 133 of the corresponding secondary quick-swap connectors to form a communication loop. In the embodiment shown in FIG. 2, the power supply system includes three battery swap boxes 10. The primary high-voltage box 20 is connected to the secondary quick-swap connectors 13 of the battery swap boxes 10 via the primary quick-swap connectors 30, so as to achieve information interaction between the three secondary high-voltage boxes 12 and the primary high-voltage box 20 via the low-voltage interfaces.

Specifically, the primary battery management unit 25 controls the charging loop by controlling the charging positive relay K11 and the charging negative relay K12, so as to achieve control of the charging process of the power supply system. It controls the auxiliary power supply loop of the vehicle by controlling on/off of the auxiliary relay K13, so as to control the discharging process of the power supply system. Through connection with the low-voltage interfaces 33 of the plurality of primary quick-swap connectors, it performs information interaction with the secondary high-voltage box 12. Specifically, it can achieve state monitoring of the battery pack 11 in the battery swap box 10 connected to the primary high-voltage box 20, and send control signals such as charging and discharging control signals to the corresponding battery swap box 10 through information interaction, so as to further perform charging and discharging control on the corresponding battery swap box 10, or the like. Through connection with the low-voltage interface 26 of the primary high-voltage box, it performs information interaction with the first external device 200, thereby receiving signals sent by the first external device 200, such as charging control signals, discharging control signals, etc., and controls the at least one charging positive relay K11, the at least one charging negative relay K12, and the auxiliary relay K13 based on the signals sent by the first external device 200, and performs signal interaction with the battery swap box 10 connected to the primary high-voltage box 20, thereby achieving charging and discharging control of the battery swap box 10, etc. In addition, the primary battery management unit 25 can also send the obtained feedback signals, monitoring signals, and other information to the first external device 200. For example, battery state signals, charging and discharging state signals, fault detection signals fed back by the battery swap boxes 10, and state signals and fault detection signals of the primary high-voltage boxes 30, etc. Herein, the first external device 200 may be a vehicle controller, an on-board control terminal, etc.

In conjunction with FIG. 4, in some embodiments, the primary high-voltage box 20 further includes: a primary high-voltage acquisition unit 27 configured to acquire a primary DC bus voltage for fault diagnosis, where the primary battery management unit 25 is further connected to the primary high-voltage acquisition unit 27 via a first primary communication bus, and is configured to receive a fault diagnosis result from the primary high-voltage acquisition unit 27.

The primary high-voltage acquisition unit 27 acquires the primary DC bus voltage, and performs fault diagnosis based on the acquired primary DC bus voltage. For example, when the primary DC bus voltage exceeds a primary voltage threshold, the primary high-voltage acquisition unit 27 determines that an overvoltage fault occurs on the primary DC bus, and sends a diagnosis result of the overvoltage fault to the primary battery management unit 25. The primary battery management unit 25 can control the primary DC bus to open based on the diagnosis result of the overvoltage fault, for example, controlling charging to end during a charging process, and controlling power supply to end during a power supply process, so as to protect the power supply system. Herein, the first primary communication bus is a bus for information transmission between modules, which can be selected based on actual conditions. The first primary communication bus is a bus for information transmission between modules, which can be selected based on actual conditions. FIG. 4 uses SCAN as the first primary communication bus.

In some embodiments, the primary high-voltage box 20 further includes: a primary wireless communication unit 28, the primary battery management unit 25 being further connected to the primary wireless communication unit 28 via a first primary communication bus, so as to perform information interaction with a second external device 300 via the primary wireless communication unit 28; and/or a primary remote debugging bridge 29, the primary battery management unit 25 being further connected to the primary remote debugging bridge 29 via a second primary communication bus, so as to perform information interaction with a remote device 400 via the primary remote debugging bridge 29. Herein, the second primary communication bus is a bus for information transmission between modules, which can be selected based on actual conditions. FIG. 4 uses DCAN as the second primary communication bus.

It should be noted that both SCAN and DCAN are controller area network (CAN) buses, but have different functions, where SCAN is mainly used for detecting the transmission of data such as high voltage and temperature, while DCAN is mainly used for uploading some summary data to a cloud platform, etc.

The primary wireless communication unit 28 may adopt a ZigBee wireless communication module, a wireless Bluetooth module (such as a Bluetooth low energy (BLE) module), a wifi communication module, etc. The primary battery management unit 25 performs information interaction with the second external device 300 based on wireless communication via the primary wireless communication unit 28. The second external device 300 may be a vehicle key, a user terminal, etc.

The primary remote debugging bridge 29 is used to perform network connection on the primary battery management unit 25 and the remote device 400 via a network. Specifically, a debugger, i.e., the primary remote debugging bridge 29, is started on the computer running the program being debugged, i.e., the primary battery management unit 25, and the debugger is connected to the computer, i.e., the remote device 400, of the developer, so that the developer can perform program debugging operations on the primary battery management unit 25 on the remote device 400.

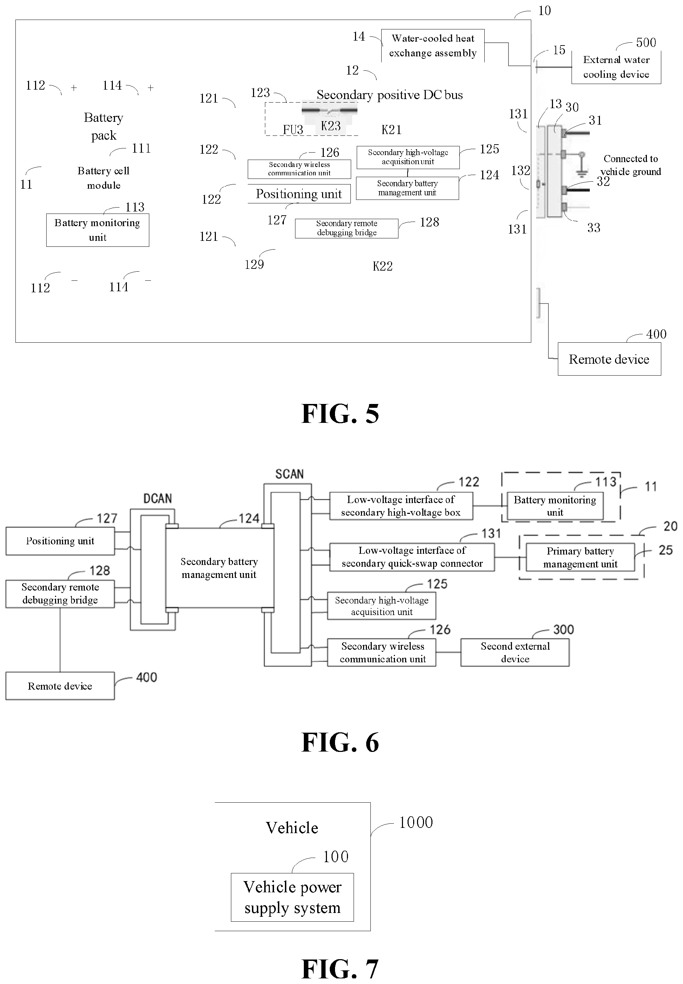

In conjunction with FIGS. 5 and 6, in some embodiments, the battery pack 11 includes: at least one battery cell module 111, the at least one battery cell module 111 being connected in series and/or in parallel and then connected to a high-voltage interface 121 of the corresponding secondary high-voltage box via a high-voltage interface 112 of the battery pack, and being configured to provide electrical energy; and at least one battery monitoring unit 113, the at least one battery monitoring unit 113 being connected to a low-voltage interface 122 of the corresponding secondary high-voltage box via a low-voltage interface 114 of the battery pack, and being configured to monitor the at least one battery cell module 111 and send a monitoring result to the corresponding secondary high-voltage box 12.

The battery cell module 111 is a module structure composed of a plurality of battery cells connected in series and/or in parallel. The plurality of battery cell modules 111 are connected in series and/or in parallel to form one battery pack 11 to enable electrical energy storage and power supply functions. Furthermore, based on the high-voltage interface 112 of the battery pack and the high-voltage interface 121 of the corresponding secondary high-voltage box, when the high-voltage interface 121 of the corresponding secondary high-voltage box is connected to the primary high-voltage box 20 via the primary quick-swap connector 30, the battery pack 11 implements charging and power supply processes based on the high-voltage interface 121 of the corresponding secondary high-voltage box, the primary quick-swap connector 30, and the primary high-voltage box 20.

The battery monitoring unit 113 is used to perform state monitoring on the battery cell module 111 within the battery pack 11 to obtain state monitoring signals of the battery cell module 111, such as voltage monitoring signals, current monitoring signals, temperature monitoring signals of the battery cell module 111, and sends the monitoring result to the corresponding secondary high-voltage box 12. When the high-voltage interface 121 of the corresponding secondary high-voltage box is connected to the primary high-voltage box 20 via the primary quick-swap connector 30, the monitoring result of the battery cell module 111 can be sent to the primary high-voltage box 30 via the low-voltage interface 122 of the secondary high-voltage box.

In this embodiment, the battery cell module 111 and the battery monitoring unit 113 are integrated within the battery pack 11, improving monitoring reliability.

In some embodiments, the secondary high-voltage box 12 includes: a secondary positive DC bus and a secondary positive relay K21, one end of the secondary positive DC bus being connected to a high-voltage positive interface of the secondary high-voltage box 12, and the other end of the secondary positive DC bus being connected to a high-voltage positive interface 131 of the corresponding secondary quick-swap connector, and the secondary positive relay K21 being connected in series on the secondary positive DC bus; and a secondary negative DC bus and a secondary negative relay K22, one end of the secondary negative DC bus being connected to a high-voltage negative interface of the secondary high-voltage box 12, and the other end of the secondary negative DC bus being connected to a high-voltage negative interface 132 of the corresponding secondary quick-swap connector, and the secondary negative relay K22 being connected in series on the secondary negative DC bus.

That is to say, the electrical energy provided by the battery pack 11 is output through the secondary positive DC bus and the secondary negative DC bus. By controlling the secondary positive relay K21 and the secondary negative relay K22 to close, the secondary positive DC bus and the secondary negative DC bus can be placed in a conductive state to perform a charging and discharging process; and by controlling the secondary positive relay K21 and the secondary negative relay K22 to open, the secondary positive DC bus and the secondary negative DC bus can be placed in an open state.

In some embodiments, the secondary high-voltage box 12 further includes: a third high-voltage protection module 123, the third high-voltage protection module 123 being connected in series on the secondary positive DC bus.

Charging and discharging protection for the secondary positive DC bus is provided by the third high-voltage protection module 123. For example, the third high-voltage protection module 123 is a fuse FU3. When a current on the secondary positive DC bus exceeds a preset current, the fuse FU3 controls disconnection of the secondary positive DC bus.

In some embodiments, the third high-voltage protection module 123 includes a fuse FU3 and a manual service disconnect K23.

The fuse FU3 can, when a current on the secondary positive DC bus exceeds a preset current threshold, disconnect the secondary positive DC bus to perform high-voltage protection. The manual service disconnect K23 can be manually controlled by an operator. For example, in a case where circuit maintenance is required or a circuit needs to be urgently cut off, the operator controls the manual service disconnect K23 to open, so that the secondary positive DC bus is in an open state, achieving power-off control. When electrical energy recovery is needed, the operator controls the manual service disconnect K23 to close, so that the primary positive DC bus resumes power supply.

In some embodiments, the secondary high-voltage box 12 further includes: a secondary battery management unit 124, the secondary battery management unit 124 being separately connected to the secondary positive relay K21 and the secondary negative relay K22, so as to perform on/off control on the secondary positive relay K21 and the secondary negative relay K22, and being connected to a low-voltage interface 122 of the secondary high-voltage box via a first secondary communication bus to perform information interaction with the battery pack 11, and being connected to a low-voltage interface 133 of the corresponding secondary quick-swap connector to perform information interaction with the primary high-voltage box 20.

The secondary battery management unit 124 controls the secondary positive relay K21 and the secondary negative relay K22 to control the secondary positive DC bus and the secondary negative DC bus, thereby controlling the charging and discharging process of the battery pack 11. Through connection with the low-voltage interface 122 of the secondary high-voltage box, it performs information interaction with the battery pack 11, for example, receiving monitoring information of the battery pack 11 and sending control signals into the battery pack 11. Through connection with the low-voltage interface 133 of the corresponding secondary quick-swap connector, when this battery swap box 10 is connected to the primary high-voltage box 20 via the primary quick-swap connector 30, it can perform information interaction with the primary high-voltage box 20, for example, receiving control signals from the primary high-voltage box 20, and sending monitoring information of the battery pack 11 to the primary high-voltage box 20.

In some embodiments, the secondary high-voltage box 12 further includes: a secondary high-voltage acquisition unit 125 configured to acquire a secondary DC bus voltage for fault diagnosis, where the secondary battery management unit 124 is further connected to the secondary high-voltage acquisition unit 125 via the first secondary communication bus, and is configured to receive a fault diagnosis result from the secondary high-voltage acquisition unit 125.

Specifically, the secondary high-voltage acquisition unit 125 acquires the secondary DC bus voltage, and performs fault diagnosis based on the acquired secondary DC bus voltage. For example, when the secondary DC bus voltage exceeds a secondary voltage threshold, the secondary high-voltage acquisition unit 125 determines that an overvoltage fault occurs on the secondary DC bus, and sends a diagnosis result of the secondary DC bus overvoltage fault to the secondary battery management unit 124. The secondary battery management unit 124 can control on/off of the secondary DC bus based on the diagnosis result of the secondary DC bus overvoltage fault. For example, during a charging process, when the secondary battery management unit 124 determines that it has received a secondary DC bus overvoltage fault, it controls charging to end; and during a power supply process, when the secondary battery management unit 124 determines that it has received a secondary DC bus overvoltage fault, it controls power supply to end, so as to perform high-voltage protection. In addition, the secondary battery management unit 124 can also send the diagnosis result of the secondary DC bus overvoltage fault to the primary high-voltage box 20.

Herein, the first secondary communication bus is a bus for information transmission between modules, which can be selected based on actual conditions. FIG. 6 uses SCAN as the first secondary communication bus.

In some embodiments, the secondary high-voltage box 12 further includes: a secondary wireless communication unit 126, the secondary battery management unit 124 being further connected to the secondary wireless communication unit 126 via the first secondary communication bus, so as to perform information interaction with a second external device 300 via the secondary wireless communication unit 126; and/or a positioning unit 127, the secondary battery management unit 124 being further connected to the positioning unit 127 via a second secondary communication bus, so as to obtain position information of the secondary high-voltage box 12 via the positioning unit 127; and/or a secondary remote debugging bridge 128, the secondary battery management unit 124 being further connected to the secondary remote debugging bridge 128 via the second secondary communication bus, so as to perform information interaction with a remote device 400 via the secondary remote debugging bridge 128. Herein, the second secondary communication bus is a bus for information transmission between modules, which can be selected based on actual conditions. FIG. 6 uses DCAN as the second secondary communication bus.

The secondary wireless communication unit 126 can adopt a ZigBee wireless communication module, a wireless Bluetooth module (such as a BLE module), a wifi communication module, etc. The secondary battery management unit 124 performs information interaction with the second external device 300 based on wireless communication via the secondary wireless communication unit 126.

The positioning unit 127 is used to determine the position information of the distribution box 10, so as to facilitate feedback of position information during the battery swap process. The positioning unit 127 can adopt a global positioning system (GPS) unit, etc.

The secondary remote debugging bridge 128 is used to perform network connection on the secondary battery management unit 124 and the remote device 400, so that the developer can perform debugging operations on programs on the secondary battery management unit 124 based on the remote device 400.

In some embodiments, the secondary high-voltage box 12 further includes: a current detection unit 129 configured to detect a secondary DC bus current, where the secondary battery management unit 124 is further connected to the current detection unit 129 to receive the secondary DC bus current.

That is to say, current detection information on the secondary DC bus is obtained through the current detection unit 129, and the current detection information of the secondary DC bus is sent to the secondary battery management unit 124. The secondary battery management unit 124 can perform on/off control on the secondary DC bus based on the current detection information of the secondary DC bus, and can also send the current detection information of the secondary DC bus to the primary high-voltage box 20.

Thus, this embodiment integrates the junction box and the control box in the related art into the secondary battery management unit 124, thereby improving the system integration degree while reducing the application costs.

In some embodiments, each battery swap box 10 further includes: a water-cooled heat exchange assembly 14, the water-cooled heat exchange assembly 14 being adapted to be connected to an external water cooling device 500 via a water cooling interface 15 of the battery swap box, and being configured to perform heat exchange on the battery swap box 10 based on hot water or cold water provided by the external water cooling device 500.

The water-cooled heat exchange assembly 14 may include a refrigerant pipeline arranged corresponding to the battery pack 11, a refrigerant pipeline arranged corresponding to the secondary battery management unit 124, etc. The water-cooled heat exchange assembly 14 is connected to the external water cooling device 500 via the water cooling interface 15 of the battery swap box. Hot water or cold water provided by the external water cooling device 500 can flow into the water-cooled heat exchange assembly 14 via the water cooling interface 15 of the battery swap box, so as to perform heat exchange on the battery swap box 10 via the water-cooled heat exchange assembly 14.

Compared to technical solutions using heating elements for heat exchange, this embodiment reduces the harness arrangement cost.

In the technical solutions of the embodiments of the present disclosure, the battery swap boxes 10 are mutually independent, allowing a user to select a capacity level according to requirements, thereby improving the spatial flexibility and the application reliability of the battery swap boxes 10. Meanwhile, during a battery swap process, the user can also perform a battery swap operation on one or more of the battery swap boxes 10, improving the battery swap flexibility. Furthermore, within each battery swap box 10, the battery pack 11 is connected to the secondary quick-swap connector 13 via the secondary high-voltage box 12. In a case where the primary high-voltage box 20 is connected to the secondary quick-swap connector 13 of the battery swap box 10 via the primary quick-swap connector 30, the battery pack 11 can be connected to the power supply interface of the primary high-voltage box 20 via the secondary high-voltage box 12, the secondary quick-swap connector 13, and the primary quick-swap connector 30, so as to establish a power supply loop to supply power to a load; or the battery pack 11 is connected to the charging interface of the primary high-voltage box 20 via the secondary high-voltage box 12, the secondary quick-swap connector 13, and the primary quick-swap connector 30, so as to establish a charging loop, allowing an external power source to charge the battery pack 11 via the charging loop.

Meanwhile, in a case where the primary quick-swap connector 30 is connected to the secondary quick-swap connector 13, the primary high-voltage box 20 and the secondary high-voltage box 12 perform information interaction to perform controls such as charging, discharging, power-on, and power-off. For example, when the primary high-voltage box 20 receives a high-voltage power-on instruction, it can control the distribution boxes 10 to power on sequentially, and determine the power-on state of each distribution box 10 through information interaction with the secondary high-voltage boxes 12; and when the primary high-voltage box 20 receives a high-voltage power-off instruction, it can control the distribution boxes 10 to power off sequentially, and determine the power-off state of each distribution box 10 through information interaction with the secondary high-voltage boxes 12. During the application process, the secondary high-voltage box 12 can obtain state information such as the battery pack state and bus state within the distribution box 10, and send the state information to the primary high-voltage box 20. The primary high-voltage box 20 controls each distribution box 10 according to the state information of each distribution box 10 while summarizing and processing each piece of state information to send the processed information to an external device, such as a vehicle controller.

Thus, the present disclosure integrates the junction box and the control box within the battery swap box of the related art. Compared to the separate design of the junction box and the control box in the related art, the system integration degree and the space utilization are improved, and the harness and connector costs are reduced.

Corresponding to the aforementioned embodiments, the present disclosure further proposes a vehicle.

As shown in FIG. 7, the vehicle 1000 of the embodiments of the present disclosure includes the vehicle power supply system 100 described above.

Finally, it should be noted that: the above examples are only used to illustrate the technical solutions of the present disclosure and not to limit them; while the present disclosure has been described in detail with reference to the preceding examples, those skilled in the art should appreciate that: it is still possible to modify the technical solutions recited in the preceding examples, or to equivalently replace some or all of the technical features; and these modifications or replacements do not deviate the nature of the corresponding technical solutions from the scope of the technical solutions of the examples of the present disclosure, which should be covered by the scope of the claims and specification of the present disclosure. In particular, the technical features mentioned in the various examples can be combined in any manner as long as there is no structural conflict. The present disclosure is not limited to the specific embodiments disclosed herein, but rather includes all technical solutions falling within the scope of the claims.

## Claims

1. A vehicle power supply system, comprising:
at least one mutually independent battery swap box, each battery swap box comprising a battery pack, a secondary high-voltage box, and a secondary quick-swap connector, wherein the secondary high-voltage box is separately connected to the corresponding battery pack and secondary quick-swap connector; and
a primary high-voltage box, the primary high-voltage box being connected with a plurality of primary quick-swap connectors, wherein each of the primary quick-swap connectors is adapted to connect to one of the secondary quick-swap connectors;
wherein in a case where the primary quick-swap connector is connected to the secondary quick-swap connector, the primary high-voltage box and the secondary high-voltage box perform information interaction, and transmit electrical energy of the battery pack to a power supply interface of the primary high-voltage box or transmit electrical energy of a charging interface of the primary high-voltage box to the battery pack.

2. The system according to claim 1, wherein the primary high-voltage box comprises:
a primary positive direct current (DC) bus, one end of the primary positive DC bus being separately connected to high-voltage positive interfaces of the plurality of primary quick-swap connectors, and the other end of the primary positive DC bus being separately connected to at least one main power supply positive interface of the primary high-voltage box; and
a primary negative DC bus, one end of the primary negative DC bus being separately connected to high-voltage negative interfaces of the plurality of primary quick-swap connectors, and the other end of the primary negative DC bus being separately connected to at least one main power supply negative interface of the primary high-voltage box;
wherein the at least one main power supply positive interface and the at least one main power supply negative interface are adapted to be connected to a main power supply loop of the vehicle, so as to supply power to a main high-voltage load of the vehicle via the battery pack.

3. The system according to claim 2, wherein the primary high-voltage box further comprises:
at least one charging positive relay, one end of the at least one charging positive relay being separately connected to the other end of the primary positive DC bus, and the other end of the at least one charging positive relay being separately correspondingly connected to at least one charging positive interface of the primary high-voltage box; and
at least one charging negative relay, one end of the at least one charging negative relay being separately connected to the other end of the primary negative DC bus, and the other end of the at least one charging negative relay being separately correspondingly connected to at least one charging negative interface of the primary high-voltage box;
wherein the at least one charging positive interface and the at least one charging negative interface are adapted to be connected to a charging loop of a charging device, so as to charge the battery pack via the charging device.

4. The system according to claim 3, wherein the primary high-voltage box further comprises:
an auxiliary relay and a first high-voltage protection module, one end of the auxiliary relay being connected to the other end of the primary positive DC bus, and the other end of the auxiliary relay being connected to an auxiliary power supply positive interface of the primary high-voltage box via the first high-voltage protection module, and the other end of the primary negative DC bus being further connected to an auxiliary power supply negative interface of the primary high-voltage box;
wherein the auxiliary power supply positive interface and the auxiliary power supply negative interface are adapted to be connected to an auxiliary power supply loop of the vehicle, so as to supply power to an auxiliary high-voltage load of the vehicle via the battery pack.

5. The system according to claim 4, wherein the first high-voltage protection module comprises a fuse.

6. The system according to any one of claims 2-5, wherein the primary high-voltage box further comprises:
a second high-voltage protection module, the second high-voltage protection module being connected in series on the primary positive DC bus.

7. The system according to claim 6, wherein the second high-voltage protection module comprises a fuse and a manual service disconnect.

8. The system according to claim 4 or 5, wherein the primary high-voltage box further comprises:
a primary battery management unit, the primary battery management unit being separately connected to the at least one charging positive relay, the at least one charging negative relay, and the auxiliary relay, so as to perform on/off control on the at least one charging positive relay, the at least one charging negative relay, and the auxiliary relay, and being separately connected to low-voltage interfaces of the plurality of primary quick-swap connectors to perform information interaction with the secondary high-voltage box, and being connected to a low-voltage interface of the primary high-voltage box to perform information interaction with a first external device.

9. The system according to claim 8, wherein the primary high-voltage box further comprises:
a primary high-voltage acquisition unit configured to acquire a primary DC bus voltage for fault diagnosis;
wherein the primary battery management unit is further connected to the primary high-voltage acquisition unit via a first primary communication bus, and is configured to receive a fault diagnosis result from the primary high-voltage acquisition unit.

10. The system according to claim 8 or 9, wherein the primary high-voltage box further comprises:
a primary wireless communication unit, the primary battery management unit being further connected to the primary wireless communication unit via a first primary communication bus, so as to perform information interaction with a second external device via the primary wireless communication unit; and/or
a primary remote debugging bridge, the primary battery management unit being further connected to the primary remote debugging bridge via a second primary communication bus, so as to perform information interaction with a remote device via the primary remote debugging bridge.

11. The system according to any one of claims 1-10, wherein the battery pack comprises:
at least one battery cell module, the at least one battery cell module being connected in series and/or in parallel and then connected to a high-voltage interface of the corresponding secondary high-voltage box via a high-voltage interface of the battery pack, and being configured to provide electrical energy; and
at least one battery monitoring unit, the at least one battery monitoring unit being connected to a low-voltage interface of the corresponding secondary high-voltage box via a low-voltage interface of the battery pack, and being configured to monitor the at least one battery cell module and send a monitoring result to the corresponding secondary high-voltage box.

12. The system according to any one of claims 1-11, wherein the secondary high-voltage box comprises:
a secondary positive DC bus and a secondary positive relay, one end of the secondary positive DC bus being connected to a high-voltage positive interface of the secondary high-voltage box, and the other end of the secondary positive DC bus being connected to a high-voltage positive interface of the corresponding secondary quick-swap connector, and the secondary positive relay being connected in series on the secondary positive DC bus; and
a secondary negative DC bus and a secondary negative relay, one end of the secondary negative DC bus being connected to a high-voltage negative interface of the secondary high-voltage box, and the other end of the secondary negative DC bus being connected to a high-voltage negative interface of the corresponding secondary quick-swap connector, and the secondary negative relay being connected in series on the secondary negative DC bus.

13. The system according to claim 12, wherein the secondary high-voltage box further comprises:
a third high-voltage protection module, the third high-voltage protection module being connected in series on the secondary positive DC bus.

14. The system according to claim 13, wherein the third high-voltage protection module comprises a fuse and a manual service disconnect.

15. The system according to any one of claims 12-14, wherein the secondary high-voltage box further comprises:
a secondary battery management unit, the secondary battery management unit being separately connected to the secondary positive relay and the secondary negative relay, so as to perform on/off control on the secondary positive relay and the secondary negative relay, and being connected to a low-voltage interface of the secondary high-voltage box via a first secondary communication bus to perform information interaction with the battery pack, and being connected to a low-voltage interface of the corresponding secondary quick-swap connector to perform information interaction with the primary high-voltage box.

16. The system according to claim 15, wherein the secondary high-voltage box further comprises:
a secondary high-voltage acquisition unit configured to acquire a secondary DC bus voltage for fault diagnosis;
wherein the secondary battery management unit is further connected to the secondary high-voltage acquisition unit via the first secondary communication bus, and is configured to receive a fault diagnosis result from the secondary high-voltage acquisition unit.

17. The system according to claim 15 or 16, wherein the secondary high-voltage box further comprises:
a secondary wireless communication unit, the secondary battery management unit being further connected to the secondary wireless communication unit via the first secondary communication bus, so as to perform information interaction with a second external device via the secondary wireless communication unit; and/or,
a positioning unit, the secondary battery management unit being further connected to the positioning unit via a second secondary communication bus, so as to obtain position information of the secondary high-voltage box via the positioning unit; and/or,
a secondary remote debugging bridge, the secondary battery management unit being further connected to the secondary remote debugging bridge via the second secondary communication bus, so as to perform information interaction with a remote device via the secondary remote debugging bridge.

18. The system according to any one of claims 15-17, wherein the secondary high-voltage box further comprises:
a current detection unit configured to detect a secondary DC bus current;
wherein the secondary battery management unit is further connected to the current detection unit to receive the secondary DC bus current.

19. The system according to any one of claims 1-18, wherein each battery swap box further comprises:
a water-cooled heat exchange assembly, the water-cooled heat exchange assembly being adapted to be connected to an external water cooling device via a water cooling interface of the battery swap box, and being configured to perform heat exchange on the battery swap box based on hot water or cold water provided by the external water cooling device.

20. A vehicle, comprising the vehicle power supply system according to any one of claims 1-19.
